# EUROPÄISCHE PATENTSCHRIFT

(11) **EP 1 347 200 B1**
(45) Veröffentlichungstag und Bekanntmachung des Hinweises auf die Patenterteilung: **21.12.2005**
(21) Anmeldenummer: 03004764.1
(22) Anmeldetag: 05.03.2003
(51) Int. Cl.: F16F 13/10

(54) **Hydrolager**
Hydraulic bearing
Support hydraulique

(30) Priorität: 21.03.2002 DE 10212692
(43) Veröffentlichungstag der Anmeldung: 24.09.2003
(73) Patentinhaber: Carl Freudenberg KG, 69469 Weinheim (DE)
(72) Erfinder: Rudolf, Hans-Joachim, 69469 Weinheim (DE); Simuttis, Arnold, 55545 Bad Kreuznach (DE)

(56) Entgegenhaltungen:
- EP-A- 0 354 381
- EP-A- 1 069 338
- DE-A- 3 808 996
- DE-A- 4 139 048
- DE-A- 19 843 558
- DE-A- 19 932 583
- DE-C- 4 041 779
- DE-C- 4 118 490

## Beschreibung

Die Erfindung betrifft ein Hydrolager, umfassend ein Traglager und ein Auflager, die durch einen im Wesentlichen hohlkeglig gestalteten Federkörper aus elastomerem Werkstoff miteinander verbunden sind und einen Arbeits- und einen Ausgleichsraum begrenzen, wobei der Arbeits- und der Ausgleichsraum mit Dämpfungsflüssigkeit gefüllt und auf den einander zugewandten Seiten durch eine Trennwand mit zumindest einer Durchbrechung voneinander getrennt sind, wobei die Durchbrechung den Arbeits- und den Ausgleichsraum strömungsleitend verbindet, wobei das Traglager auf seiner der Trennwand zugewandten Seite mit einem im Arbeitsraum angeordneten, ringförmigen Anschlag aus zähhartem Werkstoff verbunden ist, der zumindest axial in Richtung der eingeleiteten Schwingungen relativ beweglich zum Traglager angeordnet ist und wobei der Anschlag innenumfangsseitig in einer Aufnahme des Traglagers aufgenommen ist.

### Stand der Technik

Ein solches Hydrolager ist aus der DE 38 08 996 C2 bekannt. Der Anschlag ist kreisringförmig ausgebildet und umfasst einen Stützkörper, der radial innenseitig und radial außenseitig von einer Ummantelung aus elastomerem Werkstoff ummantelt ist. Der Stützkörper hat eine konstante Dicke, wobei das Verhältnis aus der Dicke des innenumfangsseitigen Rands des Anschlags und der Höhe der Aufnahme, jeweils axial in Richtung der eingeleiteten Schwingungen, etwa 0,3 beträgt. Durch die Ummantelung, die den Stützkörper radial innenseitig umgibt und axial beiderseits der Oberflächen des Stützkörpers eine Dicke aufweist, die größer ist als die Dicke des Stützkörpers, ist der Anschlag mit einer großen Axial- und Radialbeweglichkeit aufgehängt. Kardanische Bewegungen des Anschlags sind ausdrücklich erwünscht. Ein solches System hat den Vorteil, dass tieffrequente, großamplitudige Schwingungen gut abgefangen werden, wobei die Dämpfungshydraulik des Anschlags eine hydraulische Verhärtung und Resonanzen erzeugt, wenn die Frequenz über 200 Hz ansteigt. Dies führt zu Nachteilen bei der Isolierung höherfrequenter, kleinamplitudiger Schwingungen.

Aus der EP 0 191 703 B1 ist ein weiteres Hydrolager bekannt, das einen mit dem Traglager starr verbundenen Anschlag aufweist. Durch die starre Verbindung werden bei Einleitung höherfrequenter Schwingungen unerwünschte Resonanzen erzeugt, so dass sehr hohe dynamische Federraten entstehen.

### Darstellung der Erfindung

Der Erfindung liegt die Aufgabe zugrunde, ein Hydrolager der eingangs genannten Art derart weiterzuentwickeln, dass kardanische Bewegungen des Anschlags innerhalb des Arbeitsraums weitestgehend vermieden werden und der Anschlag deshalb keinen nachteiligen Einfluss auf die Dämpfungseigenschaften des Hydrolagers hat. Trotzdem soll der Anschlag durch eine weiche Ankopplung am Traglager oder die Ausgestaltung als Lose eine gute Isolierung höherfrequenter, kleinamplitudiger Schwingungen im Bereich von 100 bis 1200 Hz ermöglichen. Die Entstehung betriebsbedingter Geräusche wird dadurch auf ein Minimum reduziert.

Zur Lösung der Aufgabe sind die Merkmale des Hauptanspruchs vorgesehen. Hierbei ist von Vorteil, dass durch die großen Flächen zur axialen und radialen Führung des Anschlags hydraulische Dämpfungseffekte und Verhärtungen vermieden werden; der Anschlag kann sich in axialer Richtung parallel zur Achse des Hydrolagers bewegen; kardanische Auslenkungen des Anschlags sind demgegenüber ausgeschlossen, da die Aufnahme gleichzeitig als Führung für den Anschlag ausgebildet ist.

Erfindungsgemäß beträgt das Verhältnis aus der Dicke des innenumfangsseitigen Rands des Anschlags und der Höhe der Aufnahme, jeweils axial in Richtung der eingeleiteten Schwingungen, 0,65 bis 0,9. Durch diesen vergleichsweise engeren Bereich des Verhältnisses ist die Führung des Anschlags in der Aufnahme weiter verbessert. Die Gebrauchseigenschaften des Hydrolagers hinsichtlich der Isolierung höherfrequenter, kleinamplitudiger Schwingungen sind dann besonders gut, wenn das zuvor genannte Verhältnis kleiner als 1 ist, da der Anschlag dann als Lose innerhalb des Arbeitsraums angeordnet ist. Beträgt das Verhältnis demgegenüber 1, ist der Anschlag innerhalb der Aufnahme leicht eingespannt und daher, bezogen auf das Traglager, nicht mehr so leicht beweglich.

Die Aufnahme kann nutförmig, radial nach außen offen ausgebildet sein. Eine solche Aufnahme ist besonders einfach herstellbar. Die Aufnahme kann in einem spanabhebenden Fertigungverfahren, beispielsweise durch Drehen oder bei großen Serien durch Tiefziehen erzeugt werden.

Die Aufnahme wird durch einen den Nutgrund bildenden Boden gebildet, der sich im Wesentlichen parallel zur Achse des Hydrolagers erstreckt und durch sich im Wesentlichen in radialer Richtung erstreckende seitliche Begrenzungswandungen, die einander mit axialem Abstand benachbart zugeordnet sind und die Höhe der Aufnahme begrenzen. Die dem Anschlag zugewandten Oberflächen von Boden und Begrenzungswandungen können als Führungsflächen ausgebildet sein, die eine verkantungsfreie Beweglichkeit des Anschlags unter Vermeidung kardanischer Auslenkbewegungen, bezogen auf das Traglager, erlauben.

Eine andere Ausgestaltung kann eine nach unten offene Nut vorsehen.

Die Aufnahme kann einen Bestandteil eines einstückigen Traglagers bilden oder durch den Boden und die der Trennwand axial abgewandte Begrenzungswandung des Traglagers gebildet sein, wobei die der Trennwand zugewandte Begrenzungswandung der Aufnahme beispielsweise durch einen Schraubenkopf gebildet ist. Die Aufnahme durch das Traglager kann durch den Schraubenkopf einer das Traglager vom Arbeitsraum axial in Richtung der Umgebung durchdringenden Befestigungsschraube begrenzt sein. Einer solchen Ausgestaltung wird im Rahmen der vorliegenden Erfindung der Vorzug gegeben, da die Montage des Anschlags am Traglager dadurch vereinfacht wird und da es ohnehin einer Befestigungsschraube bedarf, um das Traglager an einem der zu lagernden Maschinenelemente zu befestigen. Zur Montage wird zunächst der Anschlag mit seinem radial innenseitigen Rand in die dafür vorgesehene, winkelförmige Aussparung des Traglagers eingefügt und durch die Montage der Befestigungsschraube, deren Schraubenkopf die der Trennwand zugewandte Begrenzungswandung der Aufnahme bildet, verliergesichert in Position gehalten. Das Traglager, der Anschlag und die Befestigungsschraube bilden eine vormontierbare Einheit. Die Herstellung und Montage des Hydrolagers ist dadurch vereinfacht. Verlangt die Lagerperipherie jedoch eine Mutter als Befestigungselement, so wird diese in das Traglager eingepresst oder eingegossen und an der Mutter eine Scheibe als Widerlager befestigt. Die Scheibe kann beispielsweise angenietet sein.

Die Aufnahme kann zumindest teilweise mit einer Beschichtung aus elastomerem Werkstoff beschichtet sein. Bewegungen des Anschlags innerhalb der Aufnahme erfolgen durch die Beschichtung der Oberflächen der Aufnahme mit elastomerem Werkstoff nahezu geräuschfrei und die Bewegung des Anschlags in seine Endlage wird durch die Beschichtung gedämpft. Dieser Effekt kann durch Elastomerverdickungen auf dem Anschlag in Form von Noppen, Wulsten, Warzen, Kugelkalotten usw. noch verbessert werden

Der Boden ist als sich in axialer Richtung erstreckende Führung für den Anschlag ausgebildet. Da die Wirkung des Anschlags nicht nur in Richtung der eingeleiteten Schwingungen, parallel zur Achse des Hydrolagers erfolgt, ist eine Führung des Anschlags in dieser Richtung, zur Vermeidung kardanischer Auslenkbewegungen des Anschlags, von großem Vorteil. Damit wird eine eindeutige, stabile Abstützung bei Querbewegungen erreicht.

Für eine gute Führung relativ beweglicher Teile zueinander ist von Vorteil, wenn die Führungsflächen, die einander berühren, vergleichsweise groß sind, um eine Verkantung der Teile zueinander zu vermeiden. Um eine solche, vergleichsweise lange Führung zu erreichen, ist es bevorzugt vorgesehen, dass der Anschlag innenumfangsseitig radial innerhalb der Aufnahme eine wulstförmige Verdickung aufweist, wobei die wulstförmige Verdickung bevorzugt eine Dicke aufweist, die zumindest doppelt so groß ist, wie die Dicke des Anschlags außerhalb der Aufnahme.

Die Verdickung kann durch eine Umbördelung gebildet sein. Umbördeln ist ein Fertigungsverfahren, das einfach und kostengünstig durchführbar ist, speziell dann, wenn der Anschlag oder der Stützkörper des Anschlags aus Blech bestehen. Der radial innenumfangsseitige Rand des Anschlags kann zur Herstellung der Verdickung im Wesentlichen ösenförmig umgebogen sein.

Das Verhältnis aus dem Durchmesser des Bodens und dem Durchmesser des innenumfangsseitigen Rands des Anschlags beträgt 0,8 bis 0,95. Durch ein Verhältnis nahe 1 ist einerseits eine gute Relativbeweglichkeit des Anschlags in der Aufnahme gegeben und andererseits eine gute Führung der beiden Teile zueinander, da der Durchmesser des Bodens nur sehr geringfügig kleiner ist, als der Durchmesser des umfangsseitigen Rands des Anschlags.

Der Anschlag kann außerhalb der Aufnahme eine im Wesentlichen konstante Dicke aufweisen. Bauteile mit konstanter Dicke sind besonders einfach herstell- und bearbeitbar.

Der Anschlag kann einen Stützkörper aus zähhartem Werkstoff umfassen, der zumindest teilweise von einer Ummantelung aus elastomerem Werkstoff ummantelt ist. Eine solche Ausgestaltung bietet sich insbesondere dann an, wenn beispielsweise die dem Anschlag zugewandten Oberflächen der Aufnahme aus metallischem Werkstoff bestehen, d.h. dass die Oberflächen nicht mit einer Beschichtung aus elastomerem Werkstoff versehen sind. Eine Ummantelung kann aber auch als Korrosionsschutz für den Stützkörper vorgesehen sein, wobei der Stützkörper in einem solchen Fall bevorzugt vollständig von der Ummantelung umschlossen ist. Gleichzeitig dient die Ummantelung der Abdichtung von Fügestellen bei eingedrückter Schraube oder Mutter, wie auch bei sich ergebenden Fugen an Verbundguß-Traglagern aus Aluminium/Stahl oder Kunststoff/Stahl.

Das Verhältnis der Dicke der Ummantelung zur Dicke des Stützkörpers kann 0,1 bis 0,5 betragen, bevorzugt 0,1 bis 0,2. Eine im Vergleich zur Dicke des Stützkörpers wesentlich geringere Dicke der Ummantelung wirkt sich besonders positiv auf die exakte Führung des Anschlags innerhalb der Aufnahme aus. Durch die nur geringe Dicke der Ummantelung weist diese nur eine geringe elastische Nachgiebigkeit auf, so dass durch die daraus resultierende gute Führung kardanische Bewegungen des Anschlags in der Aufnahme vermieden werden. Für einen guten Korrosionsschutz des Stützkörpers und zur Vermeidung von Anschlaggeräuschen bei Bewegungen des Anschlags innerhalb der Aufnahme ist die vergleichsweise dünne Ummantelung vollständig ausreichend.

Der Anschlag oder der Stützkörper des Anschlags können aus Stahl- oder Aluminiumblech bestehen. Geeignete Bleche sind kostengünstig verfügbar und leicht zu bearbeiten. Der Anschlag oder der Stützkörper des Anschlags können beispielsweise einfach und kostengünstig durch Tiefziehen hergestellt werden.

Abweichende Werkstoffe, beispielsweise polymere Werkstoffe, können anstelle von Blech zur Herstellung des Anschlags oder des Stützkörpers des Anschlags ebenfalls verwendet werden.

Der radial innere und der radial äußere Rand des Anschlags können jeweils beide gleichsinnig axial in Richtung des Traglagers oder axial in Richtung der Trennwand umgeformt sein. Für die Abstützung von großen Einfederkräften in Richtung Trennwand empfiehlt es sich, im Sinne geringstmöglicher Kraftumlenkung, den Anschlagrand von oben in Richtung Trennwand umzuformen, weil dann die Kraft von der sich radial erstreckenden Stützfläche direkt in den kegelförmigen Teil eingeleitet wird. Treten die größeren Kräfte in Zugrichtung auf, empfiehlt es sich, den Rand von unten nach oben so umzuformen, daß eine nach außen offene Nut entsteht. Wird der Anschlag nur benötigt, um die Isoliereigenschaften zu verbessern, ohne große Kräfte zu übertragen, kann die Form so vereinfacht werden, daß die Abstützung über eine in Richtung Trennwand offene Nut erfolgt.

Der Anschlag kann zu seiner Aussteifung zumindest drei gleichmäßig in Umfangsrichtung verteilte Sicken aufweisen. Die Sicken sind vorgesehen, um eine plastische Verformung des Anschlags beim Anschlagen an die in axialer Richtung benachbart angrenzenden Bauteile zu vermeiden, auch dann, wenn beispielsweise der Anschlag oder der Stützkörper des Anschlags nur aus einem vergleichsweise dünnen Blech besteht, das ohne die eingeformten Sicken unerwünscht leicht deformiert würde.

Bevorzugt sind die Sicken Bestandteile des Stützkörpers. Die Sicken können beispielsweise während des Tiefziehens des Anschlags in einem Arbeitsgang mit eingeformt werden.

Die Sicken können in Richtung des Federkörpers vorgewölbt sein. Bei einer schlagartigen Belastung des Hydrolagers auf Druck und der Anschlagberührung des Anschlags auf der Trennwand, werden durch die in Richtung des Federkörpers vorgewölbten Sicken plastische Verformungen des Anschlags besonders wirkungsvoll vermieden.

Die Begrenzungswand des Arbeitsraums kann den außenumfangsseitigen Rand des Anschlags mit radialem Abstand umschließen, wobei der durch den Abstand gebildete ringförmige Spalt von der Dämpfungsflüssigkeit durchströmbar ist. Der Anschlag sowie die Form des Spalts sind derart gestaltet, dass sich die Dämpfungsflüssigkeit, die sich innerhalb des Spalts und um den Anschlag herum befindet, quasi widerstandslos verdrängen lässt. Dadurch wird eine unerwünschte Verhärtung des Hydrolagers durch Dämpfungseffekte vermieden.

Der Anschlag kann einen sich im Wesentlichen in radialer Richtung erstreckenden Flansch aufweisen, der zur Begrenzung von Extremauslenkungen an einen Radialvorsprung des Auflagers oder an die Trennwand anlegbar ist.

Der Federkörper und der Flansch können, im Längsschnitt des Hydrolagers betrachtet, eine radiale Überdeckung aufweisen, die größer ist, als der Spalt in gleicher Richtung. Damit wird eine hohe Dauerhaltbarkeit erreicht, da der Anschlag mit seiner außen aufgebrachten Gummischicht sich großflächig gegen die Begrenzungswand abstützen kann und nicht gegen die Anbindeecken des Federkörpers drückt. Gleichzeit erhält man große, tragende Flächen in axialer Richtung, die die Ummantelung des Anschlags bei hohen axialen Kräften nur gering belasten und ebenfalls zur Lebensdauererhöhung des Lagers beitragen.

Die Trennwand kann als Düsenkäfig ausgebildet sein und ein Ober- und ein Unterteil umfassen, wobei axial zwischen dem Ober- und dem Unterteil zur Isolierung höherfrequenter, kleinamplitudiger Schwingungen eine Membran aus gummielastischem Werkstoff schwingfähig angeordnet ist. Die Membranoffenfläche innerhalb der Trennwand ist bevorzugt maximal groß zu gestalten, wobei dazu auch lokale radiale Aussparungen dienen können, die bis an den Rand der Membran in den Dichtbereich hineinragen. Eine funktionale Dichtigkeit muß jedoch erhalten bleiben. Bei Einleitung höherfrequenter, kleinamplitudiger Schwingungen bewegt sich die Membran zwischen dem Ober- und dem Unterteil phasenverschoben zu den eingeleiteten Schwingungen, um diese zu isolieren.

Eine Durchbrechung der Trennwand kann als Dämpfungskanal ausgebildet sein, wobei der Dämpfungskanal, in axialer Richtung des Hydrolagers betrachtet, durch das Ober- und das Unterteil begrenzt ist und wobei der Dämpfungskanal die Membran außenumfangsseitig umschließt. Durch den großen Durchmesser des Dämpfungskanals ist die innerhalb des Dämpfungskanals angeordnete Flüssigkeitsmasse ebenfalls vergleichsweise groß. Bei Einleitung tieffrequenter, großamplitudiger Schwingungen wird die im Dämpfungskanal befindliche Dämpfungsflüssigkeit zwischen dem Arbeitsraum und dem Ausgleichsraum hin- und herverlagert. Auf der dem Arbeitsraum abgewandten Seite ist der Ausgleichsraum durch eine im Wesentlichen drucklos Volumen aufnehmende Membran begrenzt.

### Kurzbeschreibung der Zeichnung

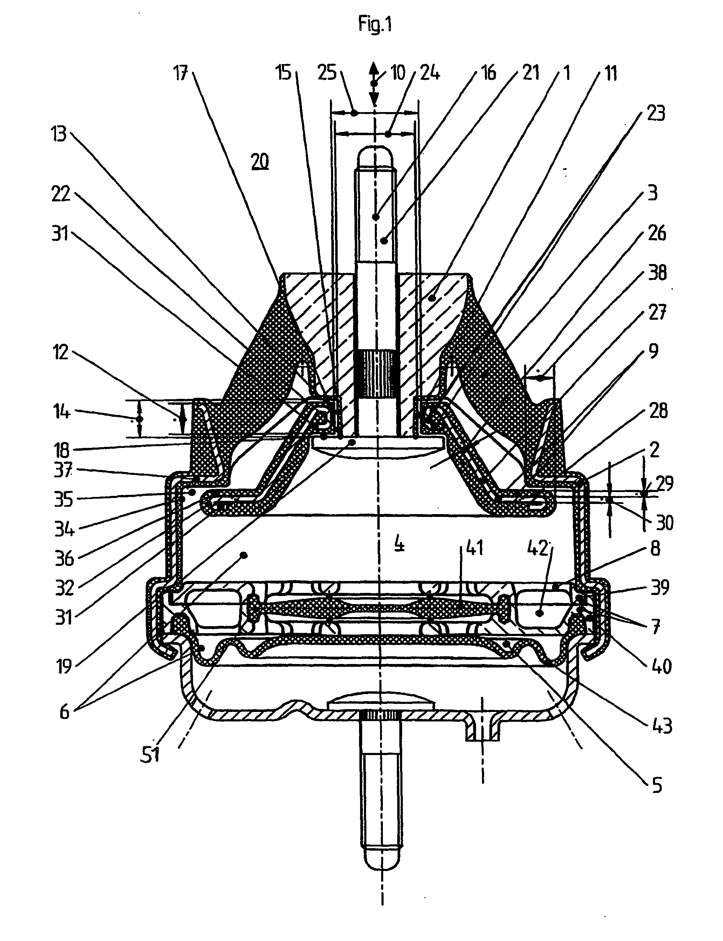

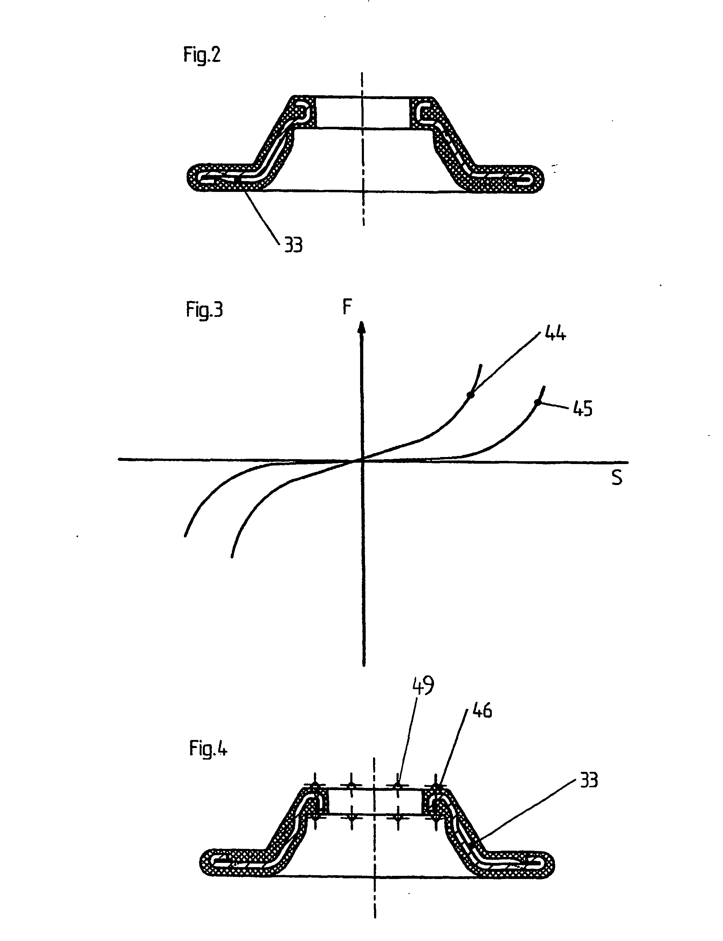

Zwei Ausführungsbeispiele des erfindungsgemäßen Hydrolagers werden nachfolgend anhand der Figuren 1 und 2 näher erläutert:
- In Figur 1: ist ein erstes Ausführungsbeispiel eines Hydrolagers gezeigt,
- in Figur 2: ist ein zweites Ausführungsbeispiel eines Anschlags gezeigt, der im Vergleich zum Ausführungsbeispiel aus Figur 1 unterschiedlich gestaltet ist,
- Figur 3: ein Kraft-Weg-Diagramm, wobei eine der Kennlinien den in der Aufnahme sanft eingespannten Anschlag, die andere Kennlinie den in der Aufnahme lose angeordneten Anschlag zeigt,
- Figur 4: ein weiteres Ausführungsbeispiel für einen Anschlag, der die Charakteristik der Figur 3 realisiert,
- Figur 5: zeigt eine Hydrolagervariante, bei der der innere Anschlag nur in Einfederrichtung wirkt,
- Figur 6: beinhaltet ein Lager für große Verformungen und einen dafür geeigneten Federkörper, so dass ein zusätzliches Widerlager in Zugrichtung in Form eines Topfes verwendet wird.

### Ausführung der Erfindung

In den Figuren 1, 5 und 6 ist jeweils ein Ausführungsbeispiel eines Hydrolagers gezeigt.

Jedes der Hydrolager umfasst ein Traglager 1 und ein Auflager 2, die durch den hohlkeglig gestalteten Federkörper 3 miteinander verbunden sind. Sowohl das Traglager 1 als auch das Auflager 2 bestehen aus einem metallischen Werkstoff; der Federkörper 3 besteht aus einem elastomeren Werkstoff.

Das Traglager 1, das Auflager 2 und der Federkörper 3 begrenzen, zusammen mit einer im Wesentlichen drucklos Volumen aufnehmenden Abschlussmembran 43, den Innenraum des Hydrolagers, in dem der Anschlag 9 und die Trennwand 7 angeordnet sind. Die Trennwand 7 begrenzt den Arbeitsraum 4 und den Ausgleichsraum 5 und weist eine Durchbrechung 8 auf, die als Dämpfungskanal 42 augebildet ist. Durch den Dämpfungskanal 42 sind der Arbeitsraum 4 und der Ausgleichsraum 5 strömungsleitend miteinander verbunden. Die Trennwand 7 ist in den hier gezeigten Ausführungsbeispielen als Düsenkäfig ausgebildet und umfasst ein Ober- 39 und ein Unterteil 40. Im zentralen Bereich der Trennwand 7 sind das Ober- 39 und das Unterteil 40 mit Durchbrechungen versehen, so dass die axial in Richtung der eingeleiteten Schwingungen 10 schwingfähige Membran von der Dämpfungsflüssigkeit 6 in Arbeitsraum 4 und Ausgleichsraum 5 beaufschlagt ist. Die Membran ist in den hier gezeigten Ausführungsbeispielen randseitig dynamisch dicht zwischen dem Ober- 39 und dem Unterteil 40 eingespannt.

Zur Funktion des Lagers wird Folgendes ausgeführt:

Bei Einleitung hochfrequenter, kleinamplitudiger Schwingungen 10 in das Hydrolager findet kein Austausch von Dämpfungsflüssigkeit 6 zwischen dem Arbeitsraum 4 und dem Ausgleichsraum 5 statt. Die Membran 41 schwingt phasenverschoben zu den eingeleiteten Schwingungen 10, bevorzugt gegenphasig und reduziert dadurch die hochfrequenten, kleinamplitudigen Schwingungen, beispielsweise in einem Bereich von 100 bis 1200 Hz.

Werden demgegenüber tieffrequente, großamplitudige Schwingungen in das Hydrolager eingeleitet, wird Dämpfungsflüssigkeit 6 vom Arbeitsraum 4 durch den Dämpfungskanal 42 in den Ausgleichsraum 5 gefördert und anschließend auf demselben Wege wieder zurück. Der Dämpfungseffekt beruht dabei auf der Trägheit der innerhalb des Dämpfungskanals 42 befindlichen Flüssigkeitssäule der Dämpfungsflüssigkeit 6.

Um einen möglichst geringen Einfluss des Anschlags 9 auf die Gebrauchseigenschaften des Hydrolagers zu haben, ist es erforderlich, dass der Anschlag bei Einleitung höherfrequenter, kleinamplitudiger Schwingungen keine oder nur geringe Kräfte überträgt und bei Einleitung großamplitudiger, tieffrequenter Schwingungen, beispielsweise mit Amplituden von mehr als 1 Millimeter, eine progressive Kraft-Weg-Charakteristik (vergleiche Figur 3) aufweist. Die Umströmung des Anschlags 9 soll möglichst minimale Auswirkungen auf die Gebrauchseigenschaften des Hydrolagers haben, so dass eine optimierte, möglichst lineare Charakteristik der dynamischen Federrate über den Frequenzbereich bis 1.200 Hz bei Amplituden ≤ 0,2 mm entsteht.

Der Anschlag 9 ist ringförmig ausgebildet und innerhalb des Arbeitsraums angeordnet. Er besteht aus einem zähharten Werkstoff und ist axial in Richtung der eingeleiteten Schwingungen 10 relativ beweglich zum Traglager 1 angeordnet. Innenumfangsseitig ist der Anschlag 9 in einer Aufnahme 11 des Traglagers 1 aufgenommen und zwar derart, dass er zumindest axial in Richtung der eingeleiteten Schwingungen 10 relativ beweglich ist. Hinsichtlich guter Gebrauchseigenschaften hat es sich als vorteilhaft bewährt, wenn das Verhältnis aus der Dicke 12 des innenumfangsseitigen Rands 13 des Anschlags 9 und der Höhe 14 der Aufnahme 11, jeweils axial in Richtung der eingeleiteten Schwingungen 10, 0,5 bis 1 beträgt. Im hier dargestellten Ausführungsbeispiel beträgt das Verhältnis 0,85, erfindungsgemäß beträgt das Verhältnis 0,65 bis 0,9.

Das Traglager 1 und die Befestigungsschraube 21 bilden zusammen mit dem Anschlag 9 eine vormontierbare Einheit. Die Aufnahme 11 wird durch den Schraubenkopf 19 der Befestigungsschraube 21, durch den den Nutgrund bildenden Boden 15 und die beiden Begrenzungswandungen 17, 18 begrenzt. Radial innenumfangsseitig weist der Anschlag 9 innerhalb der Aufnahme 11 eine wulstförmige Verdickung 23 auf. In den hier gezeigten Ausführungsbeispielen beträgt das Verhältnis aus dem Durchmesser 24 des Bodens 15 und dem Durchmesser 25 des innenumfangsseitigen Rands 13 des Anschlags 9 0,9.

Um Anschlaggeräusche des Hydrolagers während seiner bestimmungsgemäßen Verwendung auf ein Minimum zu reduzieren, ist der Anschlag 9 in den hier gezeigten Ausführungsbeispielen vollständig von einer Ummantelung 28 aus elastomerem Werkstoff ummantelt und auch die Aufnahme 11 ist auf der dem Anschlag 9 zugewandten Seite mit einer Beschichtung 22 aus elastomerem Werkstoff versehen. Die Dicke 29 der Ummantelung 28, ebenso wie die Dicke der Beschichtung 22 der Aufnahme 11 ist nur so dick, dass Anschlaggeräusche vermieden werden und sichergestellt ist, dass sich der Anschlag 9 innerhalb der Aufnahme 11 nur in radialer und axialer Richtung bewegt, demgegenüber jedoch nicht kardanisch.

Im Hinblick auf gute Gebrauchseigenschaften ist der außenumfangsseitige Rand 32 des Anschlags 9 der Begrenzungswand 34 des Arbeitsraums 4 mit radialem Abstand benachbart zugeordnet, wobei der durch den Abstand gebildete ringförmige Spalt 35 von der Dämpfungsflüssigkeit 6 durchströmbar ist. Der Federkörper 3 und der Flansch 36 weisen eine radiale Überdeckung 38 auf, die größer ist als der Spalt 35 in gleicher Richtung.

In Figur 1 sind der radial innere 13 und der radial äußere Rand 32 des Anschlags 9 jeweils axial in Richtung der Trennwand 7 umgeformt. Hierbei ist von Vorteil, dass keine scharfen Kanten entstehen, die das Elastomer beim Kontakt mit der Begrenzungswand 34 oder der Elastomerfeder 3 beschädigen.

Das Ausführungsbeispiel aus Figur 2 unterscheidet sich durch die Ausgestaltung des Anschlags 9 vom Ausführungsbeispiel aus Figur 1. Der radial innere 13 und der radial äußere Rand 32 des Anschlags 9 sind jeweils axial in Richtung des Traglagers 1 umgeformt. Diese Ausgestaltung wird speziell dann bevorzugt, wenn eine kostengünstige Lösung gefunden werden soll, bei der der Stützkörper 27 vollautomatisch mit hoher Genauigkeit hergestellt werden soll.

Zu seiner Aussteifung weist der Anschlag 9 in den hier gezeigten Ausführungsbeispielen drei gleichmäßig in Umfangsrichtung verteilte Sicken auf, die jeweils ein Bestandteil des Stützkörpers 27 sind. Die Sicken 33 sind in Richtung des Federkörpers 3 vorgewölbt und beispielsweise durch Tiefziehen erzeugt.

Zur Begrenzung von extremen Auslenkbewegungen des Traglagers 1, bezogen auf das Auflager 2 in axialer Richtung, ist der Anschlag 9 an der dem Anschlag zugewandten Seite der Trennwand 7 anlegbar (Druck) oder mit seinem Flansch 36 an einem Radialvorsprung 37 des Auflagers 2 (Zug).

In Figur 3 ist ein Kraft-Weg-Diagramm gezeigt. Die mit der Bezugsziffer 44 bezeichnete Kurve beschreibt die Federcharakteristik eines Anschlags 9, der innerhalb der Aufnahme 11 mit nur sehr geringer Kraft eingespannt ist, während die mit der Bezugsziffer 45 bezeichnete Kurve die Federcharakteristik eines Anschlags 9 zeigt, der lose innerhalb der Aufnahme 11 angeordnet ist. Das Verhältnis aus der Dicke 12 des innenumfangsseitigen Rands 13 des Anschlags 9 und der Höhe 14 der Aufnahme 11, jeweils axial in Richtung der eingeleiteten Schwingungen, beträgt für die Kurve 44 1, für die Kurve 45 demgegenüber 0,85.

Figur 4 beinhaltet eine Ausführungsform des Anschlags 9, die die Charakteristik 44 realisiert. Dazu hat die Ummantelung 28 gegenüber der Beschichtung 22 lokale Verdickungen 46, beispielsweise in Form von Noppen 49. Diese lassen Bewegungen des Anschlags 9 zu, bremsen aber vor dem Kontakt mit der Aufnahme 11 die Anschlagbewegung weich ab, so dass keine Eigengeräusche des Lagers entstehen.

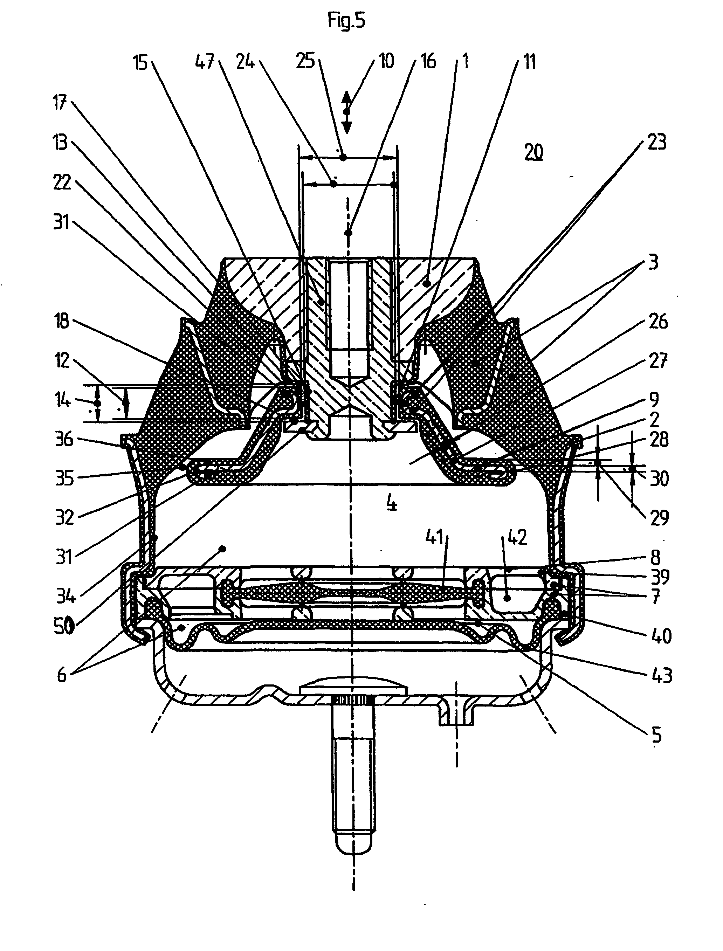

In Figur 5 ist eine Hydrolagervariante dargestellt, bei der der Anschlag 9 nur in Einfederrichtung auf die Trennwand 7 wirkt. Dabei übernimmt der Anschlag 9 die Lastverteilung von der Mitte auf den äußeren Bereich der Umbördelung 31 und belastet dadurch nur den äußeren, stabilen Bereich des Trennwand-Oberteils 39, um den filigranen Stützbereich der Membran 41, der in der Mitte des Trennwand-Oberteils 39 angeordnet ist, zu schonen.

Der Anschlag 9 selbst wird durch eine spezielle Mutter 47 gehalten, die für andere Anschraubkonzepte als in Figur 1 dargestellt, vorgesehen ist. Dabei dient als Anschlag-Widerlager 9 statt des Schraubenkopfs 19 aus Figur 1 eine stabile Scheibe 50, die an die Mutter 47 angenietet ist. Dieses hat den Vorteil, dass viele spezielle Fahrzeugmontage-Roboter mit Schrauben arbeiten können, die sich leichter als Muttern verarbeiten lassen. Außerdem verkleinern sich Montagebewegungen im Fahrzeug im Servicefall und erleichtern gegebenenfalls eine Reparatur erheblich.

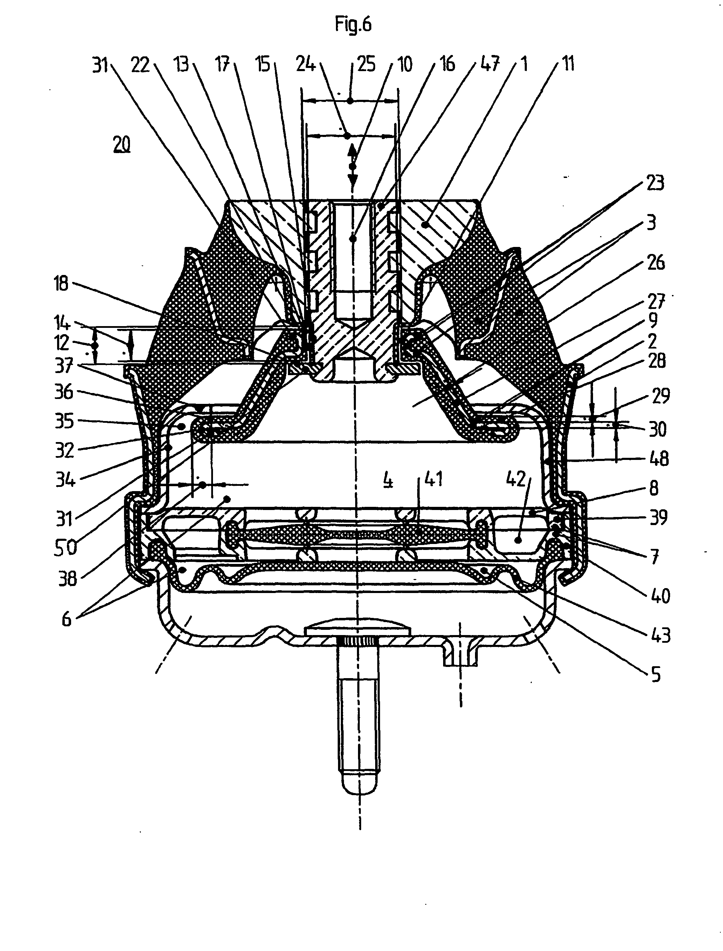

Die Figur 6 verdeutlicht eine Lagervariante mit einem Federkörper 3, der sehr große Wege in axialer und radialer Richtung zulassen soll. Aus Haltbarkeitsgründen muß die Feder radial gestreckt werden, so dass der Radialvorsprung 37 des Auflagers 2 bei geringem Bauraum nicht realisiert werden kann. Dann wird ein separater Anschlagtopf 48 mit einem Radialvorsprung 37 zwischen Auflager 2 und Trennwand 7 eingeklemmt. Dieser Anschlagtopf 48 bewirkt die Radialüberdeckung 38, um hohe Zugkräfte zu übertragen.

## Patentansprüche

1. Hydrolager, umfassend ein Traglager (1) und ein Auflager (2), die durch einen im wesentlichen hohlkeglig gestalteten Federkörper (3) aus elastomerem Werkstoff miteinander verbunden sind und einen Arbeits(4) und einen Ausgleichsraum (5) begrenzen, wobei der Arbeits- (4) und der Ausgleichsraum (5) mit Dämpfungsflüssigkeit (6) gefüllt und auf den einander zugewandten Seiten durch eine Trennwand (7) mit zumindest einer Durchbrechung (8) voneinander getrennt sind, wobei die Durchbrechung (8) den Arbeits- (4) und den Ausgleichsraum (5) strömungsleitend verbindet, wobei das Traglager (1) auf seiner der Trennwand (7) zugewandten Seite mit einem im Arbeitsraum (4) angeordneten, ringförmigen Anschlag (9) aus zähhartem Werkstoff verbunden ist, der zumindest axial in Richtung der eingeleiteten Schwingungen (10) relativ beweglich zum Traglager (1) angeordnet ist und wobei der Anschlag (9) innenumfangsseitig in einer Aufnahme (11) des Traglagers (1) aufgenommen ist, **dadurch gekennzeichnet, daß** die Aufnahme (11) durch einen eine Nutgrund bildenden Boden (15), der sich im wesentlichen parallel zu einer Achse (16) des Hydrolagers erstreckt und durch sich im wesentlichen in radialer Richtung erstreckende seitliche Begrenzungswandungen (17, 18) gebildet ist, die einander mit axialem Abstand benachbart zugeordnet sind, und eine Höhe (14) der Aufnahme (11) begrenzen, dass die Aufnahme (11) eine sich in Axialrichtung erstreckende Führung für einen innen umfangsseitigen Rand (13) des Anschlags (9) bildet, und daß das Verhältnis aus der Dicke (12) des innenumfangsseitigen Rands (13) des Anschlags (9) und der Höhe (14) der Aufnahme (11) jeweils axial in Richtung der eingeleiteten Schwingung (10) 0,65 bis 0,9 beträgt, und daß das Verhältnis aus dem Durchmesser (24) des Bodens (15) und dem Durchmesser (25) des innenumfangsseitigen Rands (13) des Anschlags (9) 0,8 bis 0,95 beträgt.

2. Hydrolager nach Anspruch 1, **dadurch gekennzeichnet, dass** die Aufnahme (11) nutförmig, radial nach außen offen ausgebildet ist.

3. Hydrolager nach einem der Ansprüche 1 bis 2, **dadurch gekennzeichnet, dass** die Aufnahme (11) durch das Traglager (1) und den Schraubenkopf (19) einer das Traglager (1) vom Arbeitsraum (4) axial in Richtung der Umgebung (20) durchdringenden Befestigungsschraube (21) begrenzt ist.

4. Hydrolager nach einem der Ansprüche 1 bis 2, **dadurch gekennzeichnet, dass** die Aufnahme (11) durch das Traglager (1) und eine mit dem Traglager (1) verbundene Scheibe (50) begrenzt ist.

5. Hydrolager nach einem der Ansprüche 1 bis 4, **dadurch gekennzeichnet, dass** die Aufnahme (11) zumindest teilweise mit einer Beschichtung (22) aus elastomerem Werkstoff beschichtet ist.

6. Hydrolager nach einem der Ansprüche 1 bis 5, **dadurch gekennzeichnet, dass** der Boden (15) als sich in axialer Richtung erstreckende Führung für den Anschlag (9) ausgebildet ist.

7. Hydrolager nach einem der Ansprüche 1 bis 6, **dadurch gekennzeichnet, dass** der Anschlag (9) innenumfangsseitig, radial innerhalb der Aufnahme (11), eine wulstförmige Verdickung (23) aufweist.

8. Hydrolager nach Anspruch 7, **dadurch gekennzeichnet, dass** die Verdickung (23) durch eine Umbördelung (31) gebildet ist.

9. Hydrolager nach einem der Ansprüche 1 bis 8, **dadurch gekennzeichnet, dass** der Anschlag (9) einen Stützkörper (27) aus zähhartem Werkstoff umfasst, der zumindest teilweise von einer Ummantelung (28) aus elastomerem Werkstoff ummantelt ist.

10. Hydrolager nach Anspruch 9, **dadurch gekennzeichnet, dass** das Verhältnis der Dicke (29) der Ummantelung (28) zur Dicke (30) des Stützkörpers (27) 0,1 bis 0,5 beträgt.

11. Hydrolager nach einem der Ansprüche 1 bis 10, **dadurch gekennzeichnet, dass** der Anschlag (9) oder der Stützkörper (27) des Anschlags (9) aus Blech oder einem polymeren Werkstoff besteht.

12. Hydrolager nach einem der Ansprüche 1 bis 11, **dadurch gekennzeichnet, dass** der radial innere (13) und der radial äußere Rand (32) des Anschlags (9) jeweils beide gleichsinnig axial in Richtung des Traglagers (1) oder axial in Richtung der Trennwand (7) umgeformt sind.

13. Hydrolager nach einem der Ansprüche 1 bis 12, **dadurch gekennzeichnet, dass** der Anschlag (9) zu seiner Aussteifung zumindest drei gleichmäßig in Umfangsrichtung verteilte Sicken (33) aufweist.

14. Hydrolager nach Anspruch 13, **dadurch gekennzeichnet, dass** die Sicken (33) Bestandteile des Stützkörpers (27) sind.

15. Hydrolager nach einem der Ansprüche 13 oder 14, **dadurch gekennzeichnet, dass** die Sicken (33) in Richtung des Federkörpers (3) vorgewölbt sind.

16. Hydrolager nach einem der Ansprüche 1 bis 15, **dadurch gekennzeichnet, dass** die Begrenzungswand (34) des Arbeitsraums (4) den außenumfangsseitigen Rand (32) des Anschlags (9) mit radialem Abstand umschließt und dass der durch den Abstand gebildete, ringförmige Spalt (35) von der Dämpfungsflüssigkeit (6) durchströmbar ist.

17. Hydrolager nach einem der Ansprüche 1 bis 16, **dadurch gekennzeichnet, dass** der Anschlag (9) einen sich im Wesentlichen in radialer Richtung erstreckenden Flansch (36) aufweist, der zur Begrenzung von Extremauslenkungen in axialer Richtung an einen Radialvorsprung (37) oder an die Trennwand (7) anlegbar ist.

18. Hydrolager nach einem der Ansprüche 1 bis 17, **dadurch gekennzeichnet, dass** der Federkörper (3) und der Flansch (36), im Längsschnitt des Hydrolagers betrachtet, eine radiale Überdeckung (38) aufweisen, die größer ist, als der Spalt (35) in gleicher Richtung.

19. Hydrolager nach einem der Ansprüche 1 bis 18, **dadurch gekennzeichnet, dass** die Trennwand (7) als Düsenkäfig ausgebildet ist und ein Ober- (39) und ein Unterteil (40) umfasst und dass axial zwischen dem Ober- (39) und dem Unterteil (40), zur Isolierung höherfrequenter, kleinamplitudiger Schwingungen, eine Membran (41) aus gummielastischem Werkstoff schwingfähig angeordnet ist, wobei das Ober- (39) und das Unterteil (40) im Bereich des Umgreifens der Membran (41) lokal bis an den Dichtwulst (51) ausgespart ist.

20. Hydrolager nach einem der Ansprüche 1 bis 19, **dadurch gekennzeichnet, dass** die Durchbrechung (8) als Dämpfungskanal (42) ausgebildet ist, dass der Dämpfungskanal (42), in axialer Richtung des Hydrolagers betrachtet, durch das Ober- (39) und das Unterteil (40) begrenzt ist und dass der Dämpfungskanal (42) die Membran (41) außenumfangsseitig umschließt.

## Claims

1. Hydraulic bearing, comprising a supporting bearing (1) and a mount (2), which are connected to each other by a substantially hollow-conically shaped spring body (3) made of elastomeric material and delimit a working chamber (4) and an equalizing chamber (5), the working chamber (4) and the equalizing chamber (5) being filled with damping fluid (6) and being divided from each other on the mutually facing sides by a dividing wall (7) with at least one aperture (8), the aperture (8) connecting the working chamber (4) and the equalizing chamber (5) in a flow-conducting manner, the supporting bearing (1) being connected on its side facing the dividing wall (7) to an annular stop (9) made of tough and hard material, which is arranged in the working chamber (4) and is arranged in such a way that it is relatively movable with respect to the supporting bearing (1), at least axially in the direction of the vibrations (10) that are introduced, and the stop (9) being accommodated on the inner circumferential side in a receptacle (11) of the supporting bearing (1), **characterized in that** the receptacle (11) is formed by a base (15), which forms the bottom of a groove and extends substantially parallel to an axis (16) of the hydraulic bearing, and by lateral delimiting walls (17, 18), which extend substantially in the radial direction, are adjacently assigned to one another with an axial spacing and delimit a height (14) of the receptacle (11), **in that** the receptacle (11) forms a guide, extending in the axial direction, for a border (13) of the stop (9) on the inner circumferential side, and **in that** the ratio of the thickness (12) of the border (13) of the stop (9) on the inner circumferential side and the height (14) of the receptacle (11), in each case axially in the direction of the vibration (10) that is introduced, is 0.65 to 0.9, and **in that** the ratio of the diameter (24) of the base (15) and the diameter (25) of the border (13) of the stop (9) on the inner circumferential side is 0.8 to 0.95.

2. Hydraulic bearing according to Claim 1, **characterized in that** the receptacle (11) is formed as a groove, open radially outwards.

3. Hydraulic bearing according to either of Claims 1 and 2, **characterized in that** the receptacle (11) is delimited by the supporting bearing (1) and the screw head (19) of a fastening screw (21), penetrating the supporting bearing (1) from the working chamber (4) axially in the direction of the surroundings (20).

4. Hydraulic bearing according to either of Claims 1 and 2, **characterized in that** the receptacle (11) is delimited by the supporting bearing (1) and a disc (50) connected to the supporting bearing (1).

5. Hydraulic bearing according to one of Claims 1 to 4, **characterized in that** the receptacle (11) is at least partly coated with a coating (22) of elastomeric material.

6. Hydraulic bearing according to one of Claims 1 to 5, **characterized in that** the base (15) is formed as a guide, extending in the axial direction, for the stop (9).

7. Hydraulic bearing according to one of Claims 1 to 6, **characterized in that** the stop (9) has on the inner circumferential side, radially within the receptacle (11), a bead-shaped thickening (23).

8. Hydraulic bearing according to Claim 7, **characterized in that** the thickening (23) is formed by a peripheral flanging (31).

9. Hydraulic bearing according to one of Claims 1 to 8, **characterized in that** the stop (9) comprises a supporting body (27) of hard and tough material, which is at least partly encapsulated by an encapsulation (28) of elastomeric material.

10. Hydraulic bearing according to Claim 9, **characterized in that** the ratio of the thickness (29) of the encapsulation (28) to the thickness (30) of the supporting body (27) is 0.1 to 0.5.

11. Hydraulic bearing according to one of Claims 1 to 10, **characterized in that** the stop (9) or the supporting body (27) of the stop (9) consists of sheet metal or a polymeric material.

12. Hydraulic bearing according to one of Claims 1 to 11, **characterized in that** the radially inner border (13) and the radially outer border (32) of the stop (9) are both in each case shaped in the same sense axially in the direction of the supporting bearing (1) or axially in the direction of the dividing wall (7).

13. Hydraulic bearing according to one of Claims 1 to 12, **characterized in that**, to stiffen it, the stop (9) has at least three beads (33) evenly distributed in the circumferential direction.

14. Hydraulic bearing according to Claim 13, **characterized in that** the beads (33) are component parts of the supporting body (27).

15. Hydraulic bearing according to either of Claims 13 and 14, **characterized in that** the beads (33) are made to protrude in the direction of the spring body (3).

16. Hydraulic bearing according to one of Claims 1 to 15, **characterized in that** the delimiting wall (34) of the working chamber (4) encloses the border (32) of the stop (9) on the outer circumferential side with a radial spacing and **in that** the annular gap (35) formed by the spacing can be flowed through by the damping fluid (6).

17. Hydraulic bearing according to one of Claims 1 to 16, **characterized in that** the stop (9) has a flange (36), which extends substantially in the radial direction and, to limit extreme deflections in the axial direction, can be placed against a radial projection (37) or against the dividing wall (7).

18. Hydraulic bearing according to one of Claims 1 to 17, **characterized in that** the spring body (3) and the flange (36), viewed in longitudinal section of the hydraulic bearing, have a radial coverage (38) which is greater than the gap (35) in the same direction.

19. Hydraulic bearing according to one of Claims 1 to 18, **characterized in that** the dividing wall (7) is formed as a nozzle cage and comprises an upper part (39) and a lower part (40) and **in that**, axially between the upper part (39) and the lower part (40), for insulating relatively high-frequency, small-amplitude vibrations, a membrane (41) made of rubber-elastic material is arranged in such a way that it can vibrate, the upper part (39) and the lower part (40) being cut down to the sealing bead (51) locally in the region where they reach around the membrane (41).

20. Hydraulic bearing according to one of Claims 1 to 19, **characterized in that** the aperture (8) is formed as a damping channel (42), **in that** the damping channel (42), viewed in the axial direction of the hydraulic bearing, is delimited by the upper part (39) and the lower part (40) and **in that** the damping channel (42) encloses the membrane (41) on the outer circumferential side.

## Revendications

1. Palier hydraulique, comprenant un palier porteur (1) et un élément d'appui (2) qui sont reliés entre eux par un corps élastique (3) en matériau élastomère réalisé essentiellement en forme de cône creux et qui délimitent une chambre de travail (4) et une chambre de compensation (5), sachant que la chambre de travail (4) et la chambre de compensation (5) sont remplies de liquide d'amortissement (6) et sont séparées l'une de l'autre sur leurs côtés en vis-à-vis par une cloison séparatrice (7) pourvue d'au moins une brèche (8), la brèche (8) reliant fluidiquement la chambre de travail (4) et la chambre de compensation (5), sachant que le palier porteur (1) est relié, sur son côté tourné vers la cloison séparatrice (7), à une butée annulaire (9) en matériau dur et tenace qui est disposée dans la chambre de travail (4) à déplacement par rapport au palier porteur (1) au moins axialement dans la direction des vibrations introduites (10), et sachant que la butée (9) est reçue sur son côté périphérique intérieur dans un logement (11) du palier porteur (1), **caractérisé en ce que** le logement (11) est formé par un fond (15), qui forme une base de rainure et s'étend essentiellement parallèlement à un axe (16) du palier hydraulique, et par des parois de délimitation latérales (17, 18) qui s'étendent essentiellement en direction radiale, sont mutuellement associées en voisinage à distance axiale et délimitent une hauteur (14) du logement (11), **en ce que** le logement (11) forme un guide s'étendant en direction axiale pour un bord périphérique intérieur (13) de la butée (9), **en ce que** le rapport de l'épaisseur (12) du bord périphérique intérieur (13) de la butée (9) et de la hauteur (14) du logement (11), respectivement axialement dans la direction des vibrations introduites (10), est compris entre 0,65 et 0,9, et **en ce que** le rapport du diamètre (24) du fond (15) et du diamètre (25) du bord périphérique intérieur (13) de la butée (9) est compris entre 0,8 et 0,95.

2. Palier hydraulique selon la revendication 1, **caractérisé en ce que** le logement (11) est réalisé en forme de rainure, en étant ouvert radialement vers l'extérieur.

3. Palier hydraulique selon la revendication 1 ou 2, **caractérisé en ce que** le logement (11) est délimité par le palier porteur (1) et par la tête de vis (19) d'une vis de fixation (21) traversant axialement le palier porteur (1) depuis la chambre de travail (4) en direction de l'environnement (20).

4. Palier hydraulique selon la revendication 1 ou 2, **caractérisé en ce que** le logement (11) est délimité par le palier porteur (1) et par un disque (50) relié au palier porteur (1).

5. Palier hydraulique selon l'une quelconque des revendications 1 à 4, **caractérisé en ce que** le logement (11) est revêtu au moins partiellement d'un revêtement (22) en matériau élastomère.

6. Palier hydraulique selon l'une quelconque des revendications 1 à 5, **caractérisé en ce que** le fond (15) est réalisé sous la forme d'un guide pour la butée (9) qui s'étend en direction axiale.

7. Palier hydraulique selon l'une quelconque des revendications 1 à 6, **caractérisé en ce que** la butée (9) présente sur son côté périphérique intérieur, radialement à l'intérieur du logement (11), un épaississement (23) en forme de bourrelet.

8. Palier hydraulique selon la revendication 7, **caractérisé en ce que** l'épaississement (23) est formé par un bord rabattu (31).

9. Palier hydraulique selon l'une quelconque des revendications 1 à 8, **caractérisé en ce que** la butée (9) comprend un corps de soutien (27) en matériau dur et tenace, qui est enrobé au moins partiellement d'un enrobage (28) en matériau élastomère.

10. Palier hydraulique selon la revendication 9, **caractérisé en ce que** le rapport de l'épaisseur (29) de l'enrobage (28) à l'épaisseur (30) du corps de soutien (27) est compris entre 0,1 et 0,5.

11. Palier hydraulique selon l'une quelconque des revendications 1 à 10, **caractérisé en ce que** la butée (9) ou le corps de soutien (27) de la butée (9) est constitué(e) de tôle ou d'un matériau polymère.

12. Palier hydraulique selon l'une quelconque des revendications 1 à 11, **caractérisé en ce que** le bord radialement intérieur (13) et le bord radialement extérieur (32) de la butée (9) sont respectivement déformés tous deux dans le même sens, axialement en direction du palier porteur (1) ou axialement en direction de la cloison séparatrice (7).

13. Palier hydraulique selon l'une quelconque des revendications 1 à 12, **caractérisé en ce que** la butée (9) présente pour son renforcement au moins trois moulures (33) uniformément réparties en direction circonférentielle.

14. Palier hydraulique selon la revendication 13, **caractérisé en ce que** les moulures (33) font partie du corps de soutien (27).

15. Palier hydraulique selon la revendication 13 ou 14, **caractérisé en ce que** les moulures (33) sont précambrées en direction du corps élastique (3).

16. Palier hydraulique selon l'une quelconque des revendications 1 à 15, **caractérisé en ce que** la paroi de délimitation (34) de la chambre de travail (4) entoure à distance radiale le bord périphérique extérieur (32) de la butée (9), et **en ce que** le liquide d'amortissement (6) peut s'écouler par l'interstice annulaire (35) formé par cette distance.

17. Palier hydraulique selon l'une quelconque des revendications 1 à 16, **caractérisé en ce que** la butée (9) présente un rebord (36) s'étendant essentiellement en direction radiale qui, afin de limiter des déflexions extrêmes, peut être appliqué en direction axiale contre une saillie radiale (37) ou contre la cloison séparatrice (7).

18. Palier hydraulique selon l'une quelconque des revendications 1 à 17, **caractérisé en ce que** le corps élastique (3) et le rebord (36), considérés dans la coupe longitudinale du palier hydraulique, présentent un recouvrement radial (38) qui est plus grand que l'interstice (35) dans la même direction.

19. Palier hydraulique selon l'une quelconque des revendications 1 à 18, **caractérisé en ce que** la cloison séparatrice (7) est réalisée sous forme de cage à buse et comprend une partie supérieure (39) et une partie inférieure (40), et **en ce qu'**une membrane vibrante (41) en matériau ayant l'élasticité du caoutchouc est disposée axialement entre la partie supérieure (39) et la partie inférieure (40) pour isoler les vibrations de haute fréquence et de faible amplitude, sachant que la partie supérieure (39) et la partie inférieure (40) sont, dans la région d'engagement autour de la membrane (41), évidées localement jusqu'au bourrelet d'étanchéité (51).

20. Palier hydraulique selon l'une quelconque des revendications 1 à 19, **caractérisé en ce que** la brèche (8) est réalisée sous forme de canal d'amortissement (42), **en ce que** le canal d'amortissement (42) est délimité, considéré dans la direction axiale du palier hydraulique, par la partie supérieure (39) et la partie inférieure (40), et **en ce que** le canal d'amortissement (42) entoure la membrane (41) sur sa circonférence extérieure.
